# EUROPEAN PATENT SPECIFICATION

(11) **EP 3 111 886 B1**
(45) Date of publication and mention of the grant of the patent: **03.04.2019**
(21) Application number: 15755146.6
(22) Date of filing: 16.02.2015
(51) Int. Cl.: A61C 9/00

(54) **TOOL FOR OBTAINING DENTAL OCCLUSION IN PATIENT WITH EDENTULOUS JAW**
WERKZEUG ZUR HERSTELLUNG EINER DENTALEN OKKLUSION BEI PATIENTEN MIT ZAHNLOSEM KIEFER
OUTIL POUR OBTENIR UNE OCCLUSION DENTAIRE CHEZ UN PATIENT AYANT UNE MÂCHOIRE ÉDENTÉE

(30) Priority: 25.02.2014 JP 2014033869
(43) Date of publication of application: 04.01.2017
(73) Proprietor: GC Corporation, Bunkyo-ku Tokyo 113-0033 (JP)
(72) Inventor: KAMOHARA, Hiroshi, Tokyo 174-8585 (JP)
(74) Representative: Müller-Boré & Partner Patentanwälte PartG mbB
(86) International application number: PCT/JP2015/054088
(87) International publication number: WO 2015/129497

(56) References cited:
- WO-A1-2013/135927
- CN-U- 202 342 223
- JP-A- 2004 008 487
- JP-A- 2006 230 689
- US-A- 2 505 056
- US-A- 2 588 169
- US-A- 5 117 816

## Description

### TECHNICAL FIELD

The present invention relates to a tool for obtaining a dental occlusion in an edentulous patient.

### BACKGROUND ART

When making a complete denture for the edentulous patient, generally, impressions of maxillary and mandibular ridges are respectively taken first, and an intraoral plaster model is then made from the impressions.

In addition, a wax rim formed on the intraoral plaster model is used to obtain the dental occlusion in order to determine a occlusal position. Next, a dental technician or the like mounts the intraoral plaster model on an articulator, and the complete denture or the like for the edentulous patient is made according to an ordinary method.

Obtaining the dental occlusion in this manner requires skill and experience, and a large difference may occur amongst practitioners. When an accurate dental occlusion cannot be obtained, the complete denture that is provided may not suit the patient. In some cases, the dental occlusion may need to be obtained again, and a new complete denture or the like may need to be made.

When making the complete denture or the like for the edentulous patient in the above described manner, a denture making method has been proposed to be able to determine a median, an occlusal plane, or the like (for example, refer to Patent Document 1). According to this proposed method, when obtaining the dental occlusion, a fitting tool for making the denture is fixed to a suitable position on the maxillary wax rim to embed artificial teeth in it, and that fitting tool has six thin dummy teeth in total, which are integrated into one piece, have a standard front shape of anterior teeth of maxilla.

The proposed method described above mounts the dummy teeth (which is the fitting tool for making the denture) on the wax rim recorded the dental occlusion on it to provide a mark of the median or the like, in order to accurately notify the median or the like from a dentist to the dental technician (for example, refer to Fig. 2 of Patent Document 1). The obtaining of the dental occlusion itself is in accordance with the conventional method (for example, refer to paragraph numbers 0016 and 0017 of Patent Document 1), and the proposed method does not provide a solution to the problem in that it is difficult to accurately determine the occlusal position.

### PRIOR ART DOCUMENT

### PATENT DOCUMENT

Patent Document 1: Japanese Laid-Open Patent Publication No. 2004-8487

US 2 588 169 A discloses means for use in dental bite blocks comprising a sleeve adapted to be anchored in the front central portion of a bite block with its axis generally horizontal and perpendicular to the front surface of the bite block, a rod slidable in said sleeve and having a manipulating portion adapted to extend outside of the bite block and a generally vertical tongue pushing plate at the end of said rod adapted to be positioned interiorly of the bite block, and means for yieldably retaining the rod in axially adjusted position in said sleeve.

### SUMMARY OF THE INVENTION

### PROBLEM TO BE SOLVED BY THE INVENTION

The present invention is conceived in view of the problem described above, and one object of the present invention is to provide a tool for obtaining a dental occlusion in an edentulous patient, which can accurately record a occlusal position of the edentulous patient by a simple method.

### MEANS OF SOLVING THE PROBLEM

According to one aspect of the present invention, a tool for obtaining a dental occlusion in an edentulous patient, includes a main body including a single rear curved plate, having a first surface that includes a first intermediate part along a vertical direction to be positioned at an intraoral buccal of maxillary and mandibular ridges of the edentulous patient, a single front curved plate, having a surface that includes a second intermediate part along the vertical direction to be positioned at extraoral upper and lower lips of the edentulous patient, a connecting part that connects the first intermediate part of the rear curved plate and the second intermediate part of the front curved plate, and a through-hole that penetrates the rear curved plate, the connecting part, and the front curved plate, wherein a position of the main body is fixed in a state in which the connecting part is held between the upper and lower lips; and an adjusting shaft inserted into the through-hole of the main body, and having a first end projecting extraorally from a center between the upper and lower lips, and a second end which has a tongue support, thereof intraorally holding a tip end of a tongue, wherein the rear curved plate has a second surface opposite to the first surface, and the through-hole penetrates the rear curved plate from the second surface to the first surface of the rear curved plate, and wherein a position of the tongue support is adjustable by the adjusting shaft when obtaining the dental occlusion in the state in which the connecting part is held between the upper and lower lips and an impression material is applied on the intraoral side on the second surface of the rear curved plate.

### EFFECTS OF THE INVENTION

According to the present invention, it is possible to provide a tool for obtaining a dental occlusion in an edentulous patient, which can accurately record a occlusal position of the edentulous patient by a simple method.

### BRIEF DESCRIPTION OF THE DRAWING

FIG. 1 is a perspective view illustrating one embodiment of a tool for obtaining a dental occlusion in an edentulous patient according to the present invention;
FIG. 2 is a plan view of the tool for obtaining the dental occlusion in the edentulous patient illustrated in FIG. 1;
FIG. 3 is a plan view illustrating a state in which an adjusting shaft is removed from a main body of the tool for obtaining the dental occlusion in the edentulous patient illustrated in FIG. 1;
FIG. 4 is a plan view illustrating a state in which an impression material is applied on the tool for obtaining the dental occlusion in the edentulous patient illustrated in FIG. 1; and
FIG. 5 is a perspective illustrating another embodiment of the tool for obtaining the dental occlusion in the edentulous patient according to the present invention.

### MODE OF CARRYING OUT THE INVENTION

A detailed description will hereinafter be given of each embodiment of the tool for obtaining the dental occlusion in the edentulous patient according to the present invention, by referring to the drawings.

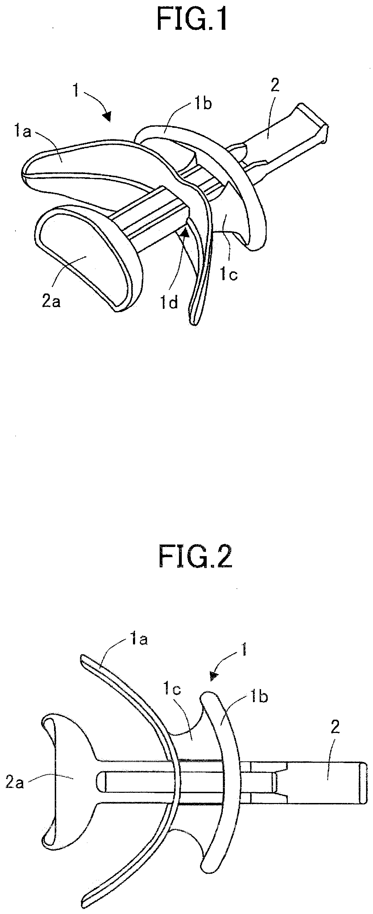

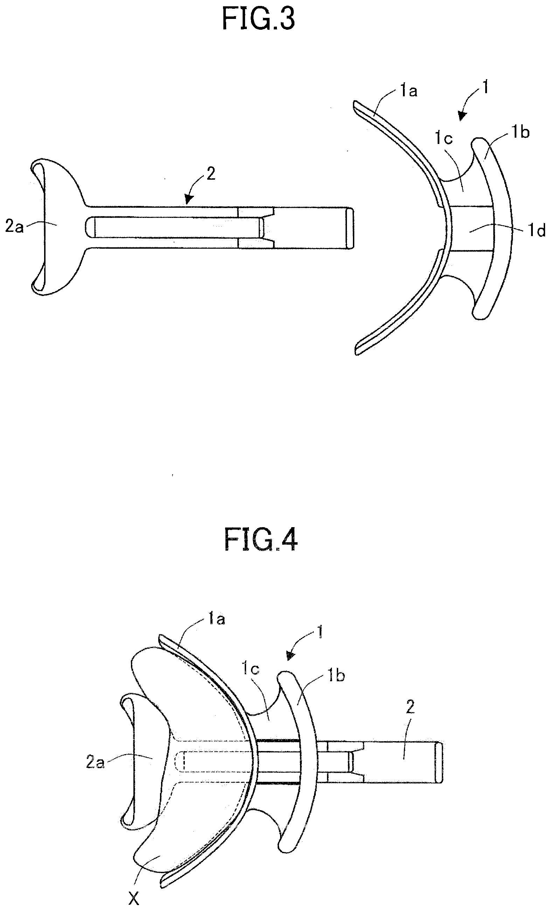

FIG. 1 is a perspective view illustrating one embodiment of the tool for obtaining the dental occlusion in the edentulous patient according to the present invention. FIG. 2 is a plan view of the tool for obtaining the dental occlusion in the edentulous patient illustrated in FIG. 1, and FIG. 3 is a plan view illustrating a state in which an adjusting shaft is removed from a main body of the tool for obtaining the dental occlusion in the edentulous patient illustrated in FIG. 1. In addition, FIG. 4 is a plan view illustrating a state in which an impression material is applied on the tool for obtaining the dental occlusion in the edentulous patient illustrated in FIG. 1.

The tool for obtaining the dental occlusion in the edentulous patient includes a main body 1, and an adjusting shaft 2 illustrated in FIGs. 1 through 4. In FIG. 4, an impression material X that is used when obtaining the dental occlusion is applied to an intraoral side of a rear curved plate 1a of the main body 1 which will be described later. The impression material X is used not only for maxillary and mandibular ridges in their entirety, but also for obtaining the dental occlusion at least between the maxillary and mandibular ridges at the anterior teeth.

In FIGs. 1 through 4, the main body 1 includes the rear curved plate 1a to be positioned at an intraoral buccal of the maxillary and mandibular ridges of the edentulous patient, a front curved plate 1b to be positioned at extraoral upper and lower lips of the edentulous patient, a connecting part 1c that connects respective intermediate parts of the rear curved plate 1a and the front curved plate 1b along a vertical direction, and a through-hole Id that penetrates the rear curved plate la, the front curved plate 1b, and the connecting part 1c. The position of the main body 1 is fixed in a state in which the connecting part 1c is held between the upper and lower lips.

The main body 1 is preferably formed by a material, such as a resin or the like, that is both soft and strong, because the main body 1 is held between the soft upper and lower lips.

Further, the main body 1 needs to do no harm to the human body, because the main body 1 is intraorally inserted into together with the adjusting shaft 2 which will be described later. In addition, the main body 1 is preferably not damaged nor deformed even when an autoclave process is performed, for example, so that the main body 1 can be reused.

The adjusting shaft 2 is inserted into the through-hole 1d of the main body 1, and includes a tongue support 2a. The adjusting shaft 2 has one end thereof projecting extraorally from a center between the upper and lower lips, and another end which has a tongue support 2a, thereof intraorally holding a tip end of a tongue. The adjusting shaft 2 adjusts the position of the tongue support 2a to suppress movement of the tongue when obtaining the dental occlusion.

The dental occlusion in a state in which the tongue is held in a natural state can be obtained by the tongue support 2a of the adjusting shaft 2.

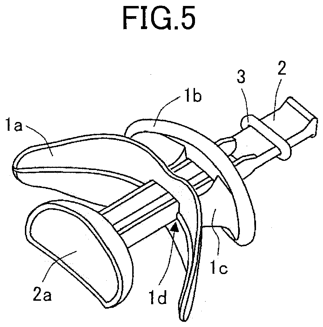

The stopper 3 is formed at a part of the adjusting shaft 2 projecting further from the front curved plate 1b. It is preferable to provide the stopper 3, because the stopper 3 can prevent the adjusting shaft 2 from intraorally falling from the main body 1, which may otherwise cause accidental swallowing, choking, or the like. The stopper 3 may be integrally formed on the adjusting shaft 2, or may be made of a ring-shaped rubber member or the like as illustrated in FIG. 5, for example. FIG. 5 is a perspective illustrating another embodiment of the tool for obtaining the dental occlusion in the edentulous patient according to the present invention.

First, when actually using the tool for obtaining the dental occlusion in the edentulous patient according to the present invention to make the complete denture or the like for the edentulous patient, the impression material X is applied on the intraoral side of the rear curved plate 1a of the main body 1, and on the adjusting shaft 2, and the main body 1 is intraorally inserted into the edentulous patient as illustrated in FIG. 4. Preferably, a groove or the like is formed at the rear curved plate 1a of the main body 1 or the adjusting shaft 2 that is intraorally inserted, to improve the effect of holding the impression material X applied thereon.

Next, the edentulous patient is urged to slowly close his or her mouth so that the upper and lower lips make contact, in order to hold the connecting part 1c between the rear curved plate 1a and the front curved plate 1b of the main body 1, and to slowly spread the impression material X between the maxillary and mandibular ridges. By obtaining the dental occlusion in a state in which the upper and lower lip positions are fixed, maxillary and mandibular positions do not become unnatural, and it is possible to obtain the dental occlusion in a simple manner urging the edentulous patient to slowly close his or her mouth. In addition, an accurate dental occlusion can be obtained in a state in which the tongue is held in a natural state by the tongue support 2a of the adjusting shaft 2.

Furthermore, impressions of the maxillary and mandibular ridges, that become a base for the intraoral shape of the edentulous patient, are obtained. Intraoral impression models are made from these impressions.

These intraoral impression models of the maxillary and mandibular ridges that are made as described above are set on an articulator, and based on the impressions obtained by the dental occlusion that is obtained beforehand, the size and position of the denture are determined to make the complete denture or the like.

A method that does not use the impression models or the articulator may obtain electronic data by performing a 3-dimensional scan on the intraoral impressions of the maxillary and mandibular ridges obtained beforehand, or the impressions obtained by the dental occlusion that is obtained beforehand. In this case, a computer may determine the size and position of the denture according to the electronic data, and make the complete denture or the like using an automatic cutting machine or the like.

By using the above described tool for obtaining the dental occlusion in the edentulous patient, the occlusal position of the edentulous patient can be accurately recorded in a simple manner.

The present inventor confirmed that, when obtaining the dental occlusion in the edentulous patient, the positions of the lips and the position of the tongue can be maintained in natural states by using the tool for obtaining the dental occlusion in the edentulous patient according to each embodiment described above, and thus, it is possible to obtain an accurate dental occlusion. More particularly, a main body of the tool includes a rear curved plate to be positioned at the intraoral buccal of the maxillary and mandibular ridges of the edentulous patient, a front curved plate to be positioned at extraoral upper and lower lips of the edentulous patient, a connecting part that connects respective intermediate parts of the rear curved plate and the front curved plate along a vertical direction, and a through-hole that penetrates the rear curved plate, the front curved plate, and the connecting part. The position of the main body is fixed in a state in which the connecting part is held between the upper and lower lips. An adjusting shaft of the tool is inserted into the through-hole of the main body, and includes a tongue support. The adjusting shaft has one end thereof projecting extraorally from a center between the upper and lower lips, and another end which has a tongue support, thereof intraorally holding a tip end of a tongue. The adjusting shaft adjusts the position of the tongue support to suppress movement of the tongue when obtaining the dental occlusion. Hence, it was confirmed that the dental occlusion can be obtained in a state in which the tongue is held in a natural state by the tongue support of the adjusting shaft, and maxillary and mandibular positions do not become fixed to unnatural positions. In addition, it was confirmed that the dental occlusion can be obtained in a relaxed state in which the edentulous patient holds the connecting part of the main body by contacting his or her upper and lower lips. Furthermore, it was confirmed that the dental occlusion can be obtained in a state in which the tongue is held in the natural state by the tongue support of the adjusting shaft that is inserted into the through-hole of the main body.

In other words, in one embodiment of the present invention, the tool for obtaining the dental occlusion in the edentulous patient includes the main body and the adjusting shaft. The main body of the tool includes the rear curved plate to be positioned at the intraoral buccal of the maxillary and mandibular ridges of the edentulous patient, the front curved plate to be positioned at the extraoral upper and lower lips of the edentulous patient, the connecting part that connects the respective intermediate parts of the rear curved plate and the front curved plate along the vertical direction, and the through-hole that penetrates the rear curved plate, the front curved plate, and the connecting part. The position of the main body is fixed in the state in which the connecting part is held between the upper and lower lips. The adjusting shaft of the tool is inserted into the through-hole of the main body, and includes the tongue support. The adjusting shaft has one end thereof projecting extraorally from the center between the upper and lower lips, and another end which has a tongue support, thereof intraorally holding the tip end of the tongue. The adjusting shaft adjusts the position of the tongue support to suppress the movement of the tongue when obtaining the dental occlusion.

The tool for obtaining the dental occlusion in the edentulous patient includes the main body and the adjusting shaft. The main body of the tool includes the rear curved plate to be positioned at the intraoral buccal of the maxillary and mandibular ridges of the edentulous patient, the front curved plate to be positioned at the extraoral upper and lower lips of the edentulous patient, the connecting part that connects the respective intermediate parts of the rear curved plate and the front curved plate along the vertical direction, and the through-hole that penetrates the rear curved plate, the front curved plate, and the connecting part. The position of the main body is fixed in the state in which the connecting part is held between the upper and lower lips. The adjusting shaft of the tool is inserted into the through-hole of the main body, and includes the tongue support. The adjusting shaft has one end thereof projecting extraorally from the center between the upper and lower lips, and another end which has a tongue support, thereof intraorally holding the tip end of the tongue. The adjusting shaft adjusts the position of the tongue support to suppress the movement of the tongue when obtaining the dental occlusion. For this reason, the dental occlusion can be obtained in the state in which the tongue is held in the natural state by the tongue support of the adjusting shaft, and the maxillary and mandibular positions do not become fixed to unnatural positions. In addition, the dental occlusion can be obtained in the relaxed state in which the edentulous patient holds the connecting part of the main body by placing his or her upper and lower lips on the connecting part. Furthermore, the dental occlusion can be obtained in the state in which the tongue is held in the natural state by the tongue support of the adjusting shaft that is inserted into the through-hole of the main body.

In addition, a stopper may be formed at a part of the adjusting shaft projecting further from the front curved plate. It was confirmed that this stopper can prevent the adjusting shaft from intraorally falling from the main body, which may otherwise cause accidental swallowing, choking, or the like.

By forming the stopper at the part of the adjusting shaft projecting further from the front curved plate, it is preferable in that this stopper can prevent the adjusting shaft from intraorally falling from the main body, which may otherwise cause accidental swallowing, choking, or the like.

This application is based on and claims the benefit of priority of Japanese Patent Application No. 2014-033869 filed to the Japan Patent Office on February 25, 2014, the entire contents of which are incorporated herein by reference.

Although the disclosed tools for obtaining the dental occlusion in the edentulous patient are described by way of embodiments, the present invention is not limited to the above described embodiments, and various variations and modifications may be made within the scope of the present invention, as defined by the appended claims.

### DESCRIPTION OF REFERENCE NUMERALS

- 1: Main Body
- 1a: Rear Curved Plate
- 1b: Front Curved Plate
- 1c: Connecting Part
- Id: Through-Hole
- 2: Adjusting Shaft
- 2a: Tongue Support
- 3: Stopper
- X: Impression Material

## Claims

1. A tool for obtaining a dental occlusion in an edentulous patient, **characterized in that** there are provided:
a main body (1) including a single rear curved plate (1a), having a first surface that includes a first intermediate part along a vertical direction, to be positioned at an intraoral buccal of maxillary and mandibular ridges of the edentulous patient, a single front curved plate (1b), having a surface that includes a second intermediate part along the vertical direction to be positioned at extraoral upper and lower lips of the edentulous patient, a connecting part (1c) that connects the first intermediate part of the rear curved plate (1a) and the second intermediate part of the front curved plate (1b), and a through-hole (1d) that penetrates the rear curved plate (1a), the connecting part (1c), and the front curved plate (1b), wherein a position of the main body (1) is fixed in a state in which the connecting part (1c) is held between the upper and lower lips; and
an adjusting shaft (2) inserted into the through-hole (1d) of the main body (1), and having a first end projecting extraorally from a center between the upper and lower lips, and a second end which has a tongue support (2a) intraorally holding a tip end of a tongue,
wherein the rear curved plate (1a) has a second surface opposite to the first surface, and the through-hole (1d) penetrates the rear curved plate (1a) from the second surface to the first surface of the rear curved plate (1a), and
wherein a position of the tongue support (2a) is adjustable by the adjusting shaft (2) when obtaining the dental occlusion in the state in which the connecting part (1c) is held between the upper and lower lips and an impression material (X) is applied on the intraoral side on the second surface of the rear curved plate (1a).

2. The tool for obtaining the dental occlusion in the edentulous patient as claimed in claim 1, **characterized in that** the adjusting shaft (2) includes a stopper (3) that is formed at a part of the adjusting shaft (2) projecting from the front curved plate (1b) towards the first end of the adjusting shaft (2).

3. The tool for obtaining dental occlusion in the edentulous patient as claimed in claim 1 or 2, **characterized in that** the adjusting shaft (2) is inserted into the through-hole (1d) and penetrates the main body (1) in an order of the rear curved plate (1a), the connecting part (1c), and the front curved plate (1b).

## Patentansprüche

1. Werkzeug zur Herstellung einer dentalen Okklusion bei Patienten mit zahnlosem Kiefer, **dadurch gekennzeichnet, dass** bereitgestellt sind:
ein Hauptkörper (1), der umfasst: eine einzige hintere gekrümmte Platte (1a) mit einer ersten Fläche, die einen ersten Zwischenteil entlang einer Vertikalrichtung umfasst, die an einer intraoralen bukkalen der Oberkiefer- und Unterkieferkämme des zahnlosen Patienten positioniert werden soll, eine einzige vordere gekrümmte Platte (1b) mit einer Fläche, die einen zweiten Zwischenteil entlang der Vertikalrichtung umfasst, die an extraoralen Ober- und Unterlippen des zahnlosen Patienten positioniert werden soll, einen Verbindungsteil (1c), der den ersten Zwischenteil der hinteren gekrümmten Platte (1a) und den zweiten Zwischenteil der vorderen gekrümmten Platte (1b) verbindet, und ein Durchgangsloch (1d), das die hintere gekrümmte Platte (1a), den Verbindungsteil (1c) und die vordere gekrümmte Platte (1b) durchdringt, wobei eine Position des Hauptkörpers (1) in einem Zustand fixiert wird, in dem der Verbindungsteil (1c) zwischen den Ober- und Unterlippen gehalten wird; und
eine Einstellwelle (2), die in das Durchgangsloch (1d) des Hauptkörpers (1) eingesetzt ist und ein erstes Ende, das von einer Mitte zwischen den Ober- und Unterlippen extraoral vorsteht, und ein zweites Ende hat, das eine Zungenstütze (2a) hat, die ein Spitzenende einer Zunge intraoral hält,
wobei die hintere gekrümmte Platte (1a) eine zweite Fläche entgegengesetzt zu der ersten Fläche hat, und das Durchgangsloch (1d) die hintere gekrümmte Platte (1a) von der zweiten Fläche zu der ersten Fläche der hinteren gekrümmten Platte (1a) durchdringt, und
wobei eine Position der Zungenstütze (2a) durch die Einstellwelle (2) einstellbar ist, wenn in dem Zustand in dem der Verbindungsteil (1c) zwischen den Ober- und Unterlippen gehalten wird und ein Abdruckmaterial (X) auf die intraorale Seite der zweiten Fläche der hinteren gekrümmten Platte (1a) aufgebracht ist, die dentale Okklusion hergestellt wird.

2. Werkzeug zur Herstellung einer dentalen Okklusion bei Patienten mit zahnlosem Kiefer nach Anspruch 1, **dadurch gekennzeichnet, dass** die Einstellwelle (2) einen Anschlag (3) umfasst, der an einem Teil der Einstellwelle (2) ausgebildet ist, der von der vorderen gekrümmten Platte (1b) in Richtung des ersten Endes der Einstellwelle (2) vorsteht.

3. Werkzeug zur Herstellung einer dentalen Okklusion bei Patienten mit zahnlosem Kiefer nach Anspruch 1 oder 2, **dadurch gekennzeichnet, dass** die Einstellwelle (2) in das Durchgangsloch (1d) eingesetzt wird und den Hauptkörper (1) in einer Reihenfolge der hinteren gekrümmten Platte (1a), des Verbindungsteils (1c) und der vorderen gekrümmten Platte (1b) durchdringt.

## Revendications

1. Outil pour obtenir une occlusion dentaire chez un patient édenté, **caractérisé en ce qu'**il existe :
un corps principal (1) incluant une plaque incurvée arrière (1a) unique ayant une première surface qui inclut une première partie intermédiaire le long d'une direction verticale, devant être positionnée au niveau d'arêtes buccales intra-orales de maxillaires et mandibulaires du patient édenté, une plaque incurvée avant (1b) unique ayant une surface qui inclut une seconde partie intermédiaire le long de la direction verticale, devant être positionnée au niveau de lèvres supérieure et inférieure extra-orales du patient édenté, une partie de raccordement (1c) qui raccorde la première partie intermédiaire de la plaque incurvée arrière (1a) et la seconde partie intermédiaire de la plaque incurvée avant (1b) et un trou traversant (1d) qui pénètre dans la plaque incurvée arrière (1a), la partie de raccordement (1c) et la plaque incurvée avant (1b), dans lequel une position du corps principal (1) est fixée dans un état dans lequel la partie de raccordement (1c) est maintenue entre les lèvres supérieure et inférieure ; et
un arbre de réglage (2) inséré dans le trou traversant (1d) du corps principal (1) et ayant une première extrémité faisant saillie de façon extra-orale à partir d'un centre entre les lèvres supérieure et inférieure et une seconde extrémité qui a un support de langue (2a) maintenant de manière extra-orale une extrémité d'embout d'une langue,
dans lequel la plaque incurvée arrière (1a) a une seconde surface opposée à la première surface et le trou traversant (1d) pénètre dans la plaque incurvée arrière (1a), de la seconde surface vers la première surface de la plaque incurvée arrière (1a) et
dans lequel une position du support de langue (2a) est réglable par l'arbre de réglage (2) lors de l'obtention de l'occlusion dentaire dans l'état dans lequel la partie de raccordement (1c) est maintenue entre les lèvres supérieure et inférieure et un matériau d'impression (X) est appliqué sur le côté intra-oral sur la seconde surface de la plaque incurvée arrière (1a).

2. Outil pour obtenir l'occlusion dentaire chez le patient édenté selon la revendication 1, **caractérisé en ce que** l'arbre de réglage (2) inclut une butée (3) qui est constituée au niveau d'une partie de l'arbre de réglage (2) faisant saillie de la plaque incurvée avant (1b) vers la première extrémité de l'arbre de réglage (2).

3. Outil pour obtenir une occlusion dentaire chez le patient édenté selon la revendication 1 ou 2, **caractérisé en ce que** l'arbre de réglage (2) est inséré dans le trou traversant (1d) et pénètre dans le corps principal (1) dans l'ordre de la plaque incurvée arrière (1a), la partie de raccordement (1c) et la plaque incurvée avant (1b).
